(19)

Europäisches
Patentamt
European
Patent Office
Office européen
des brevets

(11) **EP 2 091 226 A1**

(12) **EUROPEAN PATENT APPLICATION**

(43) Date of publication:
**19.08.2009 Bulletin 2009/34**

(51) Int Cl.:
**H04N 1/60** (2006.01)

(21) Application number: 08300092.7

(22) Date of filing: **13.02.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(71) Applicant: **Thomson Licensing
92100 Boulogne-Billancourt (FR)**

(72) Inventors:
• **Bourdon, Pascal
35340 Le Grand Fougeray (FR)**

• **Stauder, Jurgen
35440 Montreuil/ille (FR)**
• **Thiebaud, sylvain
35530, Noyal sur Vilaine (FR)**

(74) Representative: **Ruellan-Lemonnier, Brigitte
Thomson multimedia
Patent Department
46 Quai A. Le Gallo
92648 Boulogne Cedex (FR)**

(54) **Algebraic method for defining a color gamut mapping function**

(57)     This method comprises
- the definition of a global perception error function, such that, for each source color of a set to map, a value is given for this global error function;
- the definition of an energy function U(F) as a sum of the values of said global perception error function for all source colors of said set that is weighted for each source color of said set by its probability within said set,
- definition of said gamut mapping method by an algebraic function that minimizes this energy function.
Such a definition may be easily connected to actual Human Visual System-based criteria.

Fig.1

**Description**

The invention relates to an algebraic definition of a gamut mapping method.

When the gamut of colors that can be reproduced by a source device is not the same as the gamut of colors that can be reproduced by a target device, source colors belonging to the source device gamut have generally to be mapped into target colors such that these target colors belong to the target device gamut. In other words, gamut mapping is used to reproduce an image defined with respect to a source color device on a target color device, when the source device and the target device have different color gamuts with respect to each other. Gamut mapping can be used to render the image from within the source device gamut to within the target device gamut, so as to more accurately reproduce images on the target device. Gamut Mapping ensures that the colors of a source color device are transformed to be located inside the color gamut of a target color device that is intended to be used to reproduce these colors.

The color device may be a display device, as a LCD, a CRT, a projection display, a printer able to print paper or film, or an image capture device as a camera or a scanner. More generally, the term "color gamut" or "gamut" is used not only to describe the complete range of colors a color device is able to render, but also to describe the complete range of colors a given image or a given video content contains, or the complete range of colors a broadcast system can transmit or a storing system or media can store. Consequently, the color device which is associated with a color gamut may be virtual or "ideal", as defined for instance in a storing or broadcast standard, as, for instance, ITU-R BT. 709. Color gamuts may be represented in different color spaces, as in YCC, xvYCC, Adobe RGB, bgRGB, scRGB, CIELAB, e-sRGB or ROMM digital representations.

Gamut mapping of source colors of an image from a source color gamut to a target color gamut is typically performed using a gamut mapping algorithm ("GMA"), which is a particular method of mapping color data between gamuts. A gamut mapping algorithm often makes use of data that defines the boundaries of the color gamut of the source and the target color devices, in order to obtain a reference between the two gamuts for appropriate gamut mapping of colors of the image. Such data defining the gamut color boundary can be referred to as a gamut boundary description ("GBD"). See for instance US2007/081176.

Most Gamut Mapping methods tend to focus on 2D or 3D geometric solutions. Those consist in reshaping/ mapping parts of the source gamut with either hard or soft compression/clipping algorithms so it can fit in the target gamut. Some algorithms use criteria in order to limit the impact of the mapping. Known criteria are hue conservation, spatial homogeneity of mapping in color space and contrast preservation.

Despite their efficiency, the problem with geometric methods of gamut mapping is that results turn out to be highly unpredictable depending on source images and may require users to perform empirical studies while implementing those. This could be easily prevented using actual quality criteria based on Human Vision during the Gamut Mapping process. This is the purpose of another known mapping method based on the minimization of an energy function which is defined to model the global color perception error between the source gamut and the target gamut. The gamut mapping method is then defined by an algebraic function that minimize this energy function, then ensuring the optimal rendering quality on the target color device. An example of such an algebraic definition of a mapping function is for instance disclosed in the document US6833937.

Let

$$\mathbf{F} : (X_{in}, Y_{in}, Z_{in}) \in \Omega_{in} \rightarrow \mathbf{F}(X_{in}, Y_{in}, Z_{in}) \in \Omega_{out}$$

be an algebraic gamut mapping function that associates to any source color $[X_{in}\ Y_{in}\ Z_{in}]^T$ of the source gamut

$\Omega_{in} \in \mathfrak{R}^3$ a corresponding target color $\mathbf{F}(X_{in}, Y_{in}, Z_{in}) = [X_{out}\ Y_{out}\ Z_{out}]^T$ in the target gamut $\Omega_{out} \in \mathfrak{R}^3$. Perception error sub-functions $V_i(X_{in}, Y_{in}, Z_{in}, \mathbf{F}(X_{in}, Y_{in}, Z_{in}))$ or "potentials" are defined such that, for each source color $[X_{in}\ Y_{in}\ Z_{in}]^T$, a value of each potential $V_i(X_{in}, Y_{in}, Z_{in}, \mathbf{F}(X_{in}, Y_{in}, Z_{in}))$ is given. Each perception error sub-function $V_i(X_{in}, Y_{in}, Z_{in}, \mathbf{F}(X_{in}, Y_{in}, Z_{in}))$ or "potential" is defined in relationship to an optimization criteria of the gamut mapping. A global energy function is defined

$$U(\mathbf{F}) = \sum_{\Omega_{in}} \sum_{i=0}^{n} \alpha_i V_i \left( X_{in}, Y_{in}, Z_{in}, \mathbf{F}\left( X_{in}, Y_{in}, Z_{in} \right) \right)$$

to denote a weighted sum of the n perception error sub-functions $V_i(X_{in}, Y_{in}, Z_{in}, F(X_{in}, Y_{in}, Z_{in}))$ or "potentials" for all $[X_{in}$ $Y_{in} Z_{in}]^T$ source colors of the source gamut $\Omega_{in} \in \Re^3$. The factor $\alpha_i$ corresponding to any potential $V_i(F)$ is the weight that is given to this potential for the definition of the energy function. The minimization of the energy function U(F) leads to the algebraic definition of the gamut mapping function F.

As for the criteria that are mentioned above to define geometrically gamut mapping methods, non-limiting examples of known perception error sub-functions or "potentials" $V_i(F)$ that has to be globally minimized to define the mapping function are given as follows :

a) Potential related to the criteria of original color preservation :

to have the output colors as close as possible to the source colors, a first potential $V_1(F)$ is defined as follows as a simple Euclidian distance in the CIEL\*a\*b\* color space (commonly denoted as $\Delta E_{ab}$):

$$V_1(\mathbf{F}) = \sqrt{\left(L^*_{out} - L^*_{in}\right)^2 + \left(a^*_{out} - a^*_{in}\right)^2 + \left(b^*_{out} - b^*_{in}\right)^2} \;,$$

where $L^*_{out} = L^*(X_{out}, Y_{out}, Z_{out})$, $L^*_{in} = L^*(X_{in}, Y_{in}, Z_{in})$, $a^*_{out} = a^*(X_{out}, Y_{out}, Z_{out})$, $a^*_{in} = a^*(X_{in}, Y_{in}, Z_{in})$, $b^*_{out} = b^*(X_{out}, Y_{out}, Z_{out})$, and $b^*_{in} = b^*(X_{in}, Y_{in}, Z_{in})$

b) Potential related to the criteria of Color difference preservation :

to preserve in the target gamut the relationship between one source color and its neighbouring source colors in the source gamut, a second potential $V_2(F)$ is defined as follows:

$$V_2(\mathbf{F}) = \sqrt{\begin{array}{l} \left(\dfrac{\partial L^*_{out}}{\partial X_{out}} - \dfrac{\partial L^*_{in}}{\partial X_{in}}\right)^2 + \left(\dfrac{\partial a^*_{out}}{\partial X_{out}} - \dfrac{\partial a^*_{in}}{\partial X_{in}}\right)^2 + \left(\dfrac{\partial b^*_{out}}{\partial X_{out}} - \dfrac{\partial b^*_{in}}{\partial X_{in}}\right)^2 \\[3mm] + \left(\dfrac{\partial L^*_{out}}{\partial Y_{out}} - \dfrac{\partial L^*_{in}}{\partial Y_{in}}\right)^2 + \left(\dfrac{\partial a^*_{out}}{\partial Y_{out}} - \dfrac{\partial a^*_{in}}{\partial Y_{in}}\right)^2 + \left(\dfrac{\partial b^*_{out}}{\partial Y_{out}} - \dfrac{\partial b^*_{in}}{\partial Y_{in}}\right)^2 \\[3mm] + \left(\dfrac{\partial L^*_{out}}{\partial Z_{out}} - \dfrac{\partial L^*_{in}}{\partial Z_{in}}\right)^2 + \left(\dfrac{\partial a^*_{out}}{\partial Z_{out}} - \dfrac{\partial a^*_{in}}{\partial Z_{in}}\right)^2 + \left(\dfrac{\partial b^*_{out}}{\partial Z_{out}} - \dfrac{\partial b^*_{in}}{\partial Z_{in}}\right)^2 \end{array}}$$

c) Potential related to the criteria of Grey levels preservation : a third potential $V_3(F)$ is defined that specifically evaluates hue and lightness changes close to the grey axis:

$$V_3(\mathbf{F}) = \frac{\sqrt{\left(L^*_{out} - L^*_{in}\right)^2 + \left(h_{ab,out} - h_{ab,in}\right)^2}}{1 + \left(a^*_{in}\right)^2 + \left(b^*_{in}\right)^2} \;,$$

with $h_{ab}$ being the hue angle in degrees between the projection of the incoming color onto the a\*b\* plane and the a\* axis.

This model of minimization of an energy function is obviously based on Gibbs' distribution models that are commonly used in Markovian segmentation algorithms. Each potential $V_i(F)$ can be defined based on Human Visual System constraints and uses a weighting term $\alpha_i$ which value denotes the importance given to this potential.

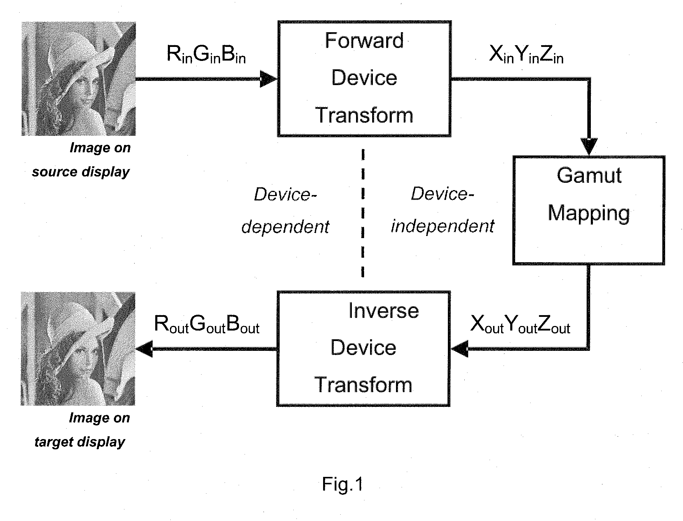

A functional scheme of the Gamut Mapping process is represented on figure 1: the source and target color devices (here : display) have been previously characterized to provide the RGB to XYZ conversion law ("Forward device transform") and the XYZ to RGB conversion law ("Reverse device transform") and the gamut properties; then the incoming source image is converted from device-dependent RGB vector values to their corresponding device-independent XYZ vectors. Original vectors $(X_{in}, Y_{in}, Z_{in})$ are then mapped to $(X_{out}, Y_{out}, Z_{out})$, either using a pre-computed 3D LUT that applies to all images, or using an on-the-fly computation scheme for error minimization. Finally an XYZ to RGB conversion is performed using the target color device characteristics.

Geometrical gamut mapping methods as algebraic gamut mapping methods are generally independent of the source colors or of the source images to be mapped. For example, the energy function may lead to a loss of detail for saturated colors that are compressed while preserving saturation and detail of non-saturated colors such as skin tones. When such an independent mapping method is applied to artificial, animated images containing notably saturated colors, the result may be very disappointing. Another problem is that one single marginal (maybe noisy) pixel of an image could highly and unnecessarily increase the source gamut's size, resulting in stronger compromises for other, more representative pixels.

Generally, a set of source colors generally comprises colors that are known a-priori to be more important and other colors that are known to be less important. For example, these colors may just be more frequent and less frequent, respectively, according to their occurrence in the set of source colors to map. These colors may be more important for the Director of Photography or less important : for example, skin tones are often more important than other colors. The source color distribution should then take into account not only the frequency of source colors in an image or a set of images, but also the importance that is given to these source colors. Other type of "weights" may be added to define the distribution of source colors, as, for instance, the visibility of the colors by the human eye, as, for example, differences in dark blue colors are less visible than for other colors.

Geometrical gamut mapping methods as algebraic gamut mapping methods are generally dedicated to a specific source color device and to a specific target color device, but are not adapted to specific distributions of source colors inside the gamut of the source color device and/or do not address specific distributions of target colors inside the gamut of the target color device. It may happen that, through the mapping of source colors into target colors, the distribution of source colors within a set of specific interest is transformed into a very different distribution of corresponding target colors, thus generating annoying artefacts.

The patent US6128407 partially addresses this problem when the gamut mapping method is defined geometrically. Claim 1 of this patent US6128407 proposes to calculate the distribution of the source colors to map in a color space and in the 2D image space and then to determine from this one or more color reproduction parameters, for example for a gamut compression method (see claim 7). In a similar way, the patent US7064864 proposes in claim 2 to analyze a distribution pattern of data of a (source) image to be displayed, for example tone distribution or saturation distribution (claim 3). The pattern is used to determine from this a color gamut compression method. Unfortunately, these documents address only geometrical gamut mapping methods.

An object of the invention is to solve the same problem for algebraic gamut mapping methods.

For this purpose, the subject of the invention is a method of definition of a gamut mapping function $\mathbf{F}:(X_{in}, Y_{in}, Z_{in}) \in \Omega_{in} \to \mathbf{F}(X_{in}, Y_{in}, Z_{in}) \in \Omega_{out}$ that is adapted to map any source color $[X_{in}\ Y_{in}\ Z_{in}]^T$ of a set of source colors into a target color $\mathbf{F}(X_{in}, Y_{in}, Z_{in}) = [X_{out}\ Y_{out}\ Z_{out}]^T$,

wherein each source color $(X_{in}, Y_{in}, Z_{in})$ of said set is given a probability $P(X_{in}, Y_{in}, Z_{in})$ within said set, such that the sum of probabilities for all source colors $(X_{in}, Y_{in}, Z_{in})$ within said set is equal to 1, or $\displaystyle\sum_{\Omega_{in}} \left( P(X_{in}, Y_{in}, Z_{in}) \right) = 1$, said method comprising the following steps :

- definition of a global perception error function, such that, for each source color $[X_{in}\ Y_{in}\ Z_{in}]^T$ of said set, a value is given for this global error function;
- definition of an energy function U(F) as a sum of the values of said global perception error function for all source colors of said set,
- deduction of the said gamut mapping function as the function that minimize of this energy function,

characterized in that said sum of the values of said global perception error function defining said energy function U(F) is weighted, for each source color of said set, by its probability $P(X_{in}, Y_{in}, Z_{in})$.

Preferably, this method also comprises the following steps :

- definition of a plurality of (n+1) perception error sub-functions $V_i(X_{in}, Y_{in}, Z_{in}, \mathbf{F}(X_{in}, Y_{in}, Z_{in}))$, where $n \geq 0$, with i=0 to n, such that, for each source color $[X_{in}\ Y_{in}\ Z_{in}]^T$ of said set, a value $V_i(X_{in}, Y_{in}, Z_{in}, \mathbf{F}(X_{in}, Y_{in}, Z_{in}))$ is given for each perception error sub-function;

- for each perception error sub-function $V_i(X_{in}, Y_{in}, Z_{in}, \mathbf{F}(X_{in}, Y_{in}, Z_{in}))$, definition of a scalar weight $\alpha_i$ wherein $0 < \alpha_i \leq$ 1 and $\sum_{i=0}^{n} \alpha_i = 1$ ; and in that said value that is given to the global perception error function for each source color $[X_{in}\ Y_{in}\ Z_{in}]^T$ of said set is equal to the sum of the values of each perception error sub-functions $V_i(X_{in}, Y_{in}, Z_{in}, \mathbf{F}(X_{in}, Y_{in}, Z_{in}))$ taken at said source color $[X_{in}\ Y_{in}\ Z_{in}]^T$ and weighted by its corresponding weight $\alpha_i$

$$: \sum_{i=0}^{n} \alpha_i V_i\left(X_{in}, Y_{in}, Z_{in}, \mathbf{F}\left(X_{in}, Y_{in}, Z_{in}\right)\right).$$

The perception error sub-functions are generally called "potentials". Any perception error sub-function can be chosen, as those previously cited that are related to the criteria of original color preservation, related to the criteria of Color difference preservation, and/or related to the criteria of Grey levels preservation.

For each source color, the algebraic expression of said global weighted potential is then

$$\sum_{i=0}^{n} \alpha_i V_i\left(X_{in}, Y_{in}, Z_{in}, \mathbf{F}\left(X_{in}, Y_{in}, Z_{in}\right)\right).$$

The algebraic expression of said energy function is then :

$$U(\mathbf{F}) = \sum_{\Omega_{in}} \left(P(X_{in}, Y_{in}, Z_{in})\right) \sum_{i=0}^{n} \alpha_i V_i\left(X_{in}, Y_{in}, Z_{in}, \mathbf{F}\left(X_{in}, Y_{in}, Z_{in}\right)\right).$$

The computation of the probability function $P(X_{in}, Y_{in}, Z_{in})$ may be performed on the source colors of a fixed image, of a set of images, such set being for instance a video sequence.

As the energy function is now dependant on a characteristic of the source color values to be mapped, annoying artefacts related to gamut mapping are limited and both preserving saturation for the details for saturated colors and preserving detail of non-saturated colors such as skin tones can be obtained.

The advantage of the invention is that the definition of a Gamut Mapping function according to the invention may be easily connected to actual Human Visual System-based criteria, as opposed to geometry-based methods that are less predictable or non-statistical error minimization that doesn't totally rely on image content. For a given set of criteria there will be an optimal solution.

Preferably, each perception error sub-function $V_i(X_{in}, Y_{in}, Z_{in}, \mathbf{F}(X_{in}, Y_{in}, Z_{in}))$ or "potential" is defined in relationship to an optimization criteria of the gamut mapping defined by said gamut mapping function.

Preferably, said set of source colors is an image or a segment of a video sequence.

The invention will be more clearly understood on reading the description which follows, given by way of non-limiting example and with reference to the appended figures in which:

- Figure 1 illustrates the workflow of the reproduction, on a target display, of images that are originally dedicated to a source display, showing the importance of the gamut mapping step.
- Figure 2 and 4 illustrates specific images to map in the main embodiment of the invention.
- Figure 3 and 5 illustrates the probability of source colors within, respectively, the specific images of figure 2 and of figure 4.

A main non-limiting embodiment of the invention is now explained in connection with a source color device having its source color gamut and with a target color device having its target color gamut. The objective of this main embodiment is to define algebraically a gamut mapping function that is designed to map a specific image or video sequence from the source color gamut into the target color gamut. In the case of video sequences, a temporal segmentation is prepared in order to define different Gamut Mapping functions, each of these being adapted to a different segment of this video sequence. Within this specific image or this specific segment, each source color $(X_{in}, Y_{in}, Z_{in})$ is given a probability $P(X_{in}, Y_{in}, Z_{in})$, such that the sum of probabilities for all source colors $(X_{in}, Y_{in}, Z_{in})$ in this image or segment is equal to 1, i.e. $\displaystyle\sum_{\Omega_{in}}\left(P\left(X_{in},Y_{in},Z_{in}\right)\right)=1$. Statistical analysis is performed for each image or each segment.

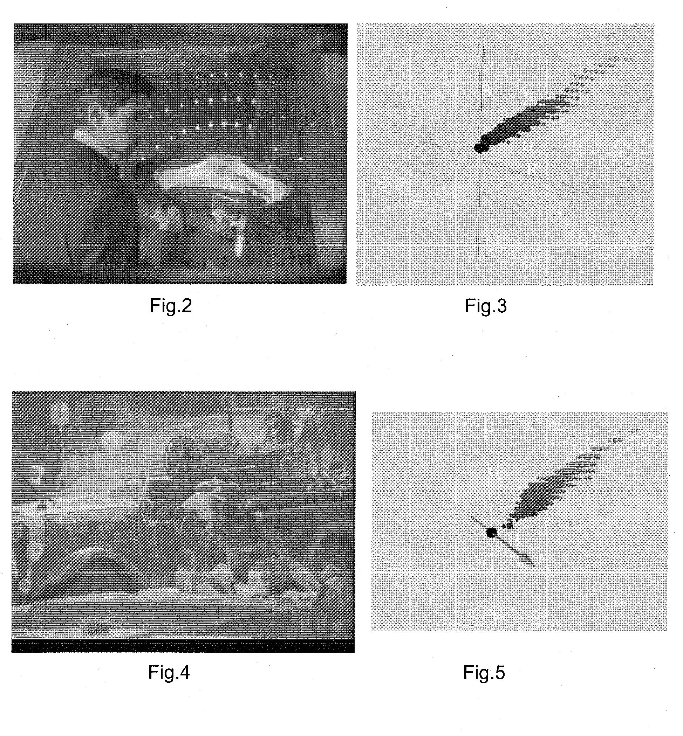

Figure 5 and figure 3 show examples of 3D RGB histograms for respectively two different fixed images illustrated on figure 2 and 4, where probability values of each source color $(X_{in},Y_{in},Z_{in})$ are represented by the volume of a sphere at the location of this source color $(X_{in},Y_{in},Z_{in})$ in the RGB coordinates.

Then, the colorimetric characteristics (XYZ gamut) are measured for both source and target color devices, using an appropriate measurement system.

Then, as previously described in connection with the prior art, a plurality of (n+1) perception error sub-functions $V_i(X_{in},Y_{in},Z_{in},\mathbf{F}(X_{in},Y_{in},Z_{in}))$ are defined (n ≥ 0, with i=0 to n), such that, for each source color $[X_{in}\ Y_{in}\ Z_{in}]^T$ of said specific image or specific segment, a value $V_i(X_{in},Y_{in},Z_{in},\mathbf{F}(X_{in},Y_{in},Z_{in}))$ is given for each perception error sub-function. Any perception error sub-function can be chosen, as those previously cited that are related to the criteria of original color preservation, related to the criteria of Color difference preservation, and/or related to the criteria of Grey levels preservation. For each perception error sub-function $V_i(X_{in},Y_{in},Z_{in},\mathbf{F}(X_{in},Y_{in},Z_{in}))$, the value of a scalar weight $\alpha_i$ is defined in connection to the importance of the criteria which support this perception error sub-function, wherein $0 < \alpha_{i\ \leq}\ 1$ and

$\displaystyle\sum_{i=0}^{n}\alpha_i = 1$. Then, a global perception error function is defined, where, for each source color $[X_{in}\ Y_{in}\ Z_{in}]^T$ of said specific image or specific segment, the value of this function is equal to the sum of the values of each perception error sub-functions $V_i(X_{in},Y_{in},Z_{in},\mathbf{F}(X_{in},Y_{in},Z_{in}))$ taken at said source color $[X_{in}\ Y_{in}\ Z_{in}]^T$ and weighted by its corresponding

weight $\alpha_I$, as illustrated in the following formula : $\displaystyle\sum_{i=0}^{n}\alpha_i V_i\left(X_{in},Y_{in},Z_{in},\mathbf{F}\left(X_{in},Y_{in},Z_{in}\right)\right)$. Then, an energy function U(F) is defined as the sum of the values of said global perception error function for all source colors of said specific image or specific segment, weighted, according to the invention, by the probability $P(X_{in},Y_{in},Z_{in})$ of the source colors within said specific image or specific segment. The algebraic expression of said energy function is then :

$$U(\mathbf{F}) = \sum_{\Omega_{in}}\left(P\left(X_{in},Y_{in},Z_{in}\right)\right)\sum_{i=0}^{n}\alpha_i V_i\left(X_{in},Y_{in},Z_{in},\mathbf{F}\left(X_{in},Y_{in},Z_{in}\right)\right).$$

Then, the gamut mapping function related to said specific image or specific segment is defined as the function $\mathbf{F}:(X_{in},Y_{in},Z_{in})\in\ \Omega_{in}\rightarrow\mathbf{F}(X_{in},Y_{in},Z_{in})\in\ \Omega_{out}$ that minimizes this energy function. This gamut mapping function allows to fit the source gamut inside the target gamut in a way that is specially adapted to the color content of the specific image or the specific segment. All source colors of this specific image or specific segment are transformed according to the workflow previously described in reference to figure 1, including a gamut mapping step using this gamut mapping function, then providing target colors that allow the reproduction of this specific image or specific segment on the target color device, with a quality that is optimized to the target gamut of this target color device. The resulting image or segment can then be delivered for direct vision on the target device.

For other specific image or specific segment of a video sequence, another gamut mapping function can be defined following the same steps as above. Globally, as the energy function is now dependant on a characteristic of the source color values to be mapped, annoying artefacts related to gamut mapping are limited and both preserving saturation for the details for saturated colors and preserving detail of non-saturated colors such as skin tones can be obtained.

It will thus be appreciated that those skilled in the art will be able to devise various arrangements that, although not explicitly described or shown herein, embody the present principles and are included within its spirit and scope.

The different steps of the method of definition of a gamut mapping function according to the invention may be implemented through the use of dedicated hardware, as well as hardware capable of executing software in association with appropriate software. When provided by a processor, these steps may be implemented by a single dedicated processor, by a single shared processor, or by a plurality of individual processors, some of which may be shared.

Although the invention ha s been described herein with reference to a main embodiment, it is to be understood that the present invention is not limited to this precise embodiment, and that various changes and modifications may be effected therein by one of ordinary skill in the pertinent art without departing from the scope or spirit of the present invention. All such changes and modifications are intended to be included within the scope of the present principles as set forth in the appended claims.

**Claims**

1. Method of definition of a gamut mapping function $\mathbf{F}$:$(X_{in}, Y_{in}, Z_{in}) \in \Omega_{in} \rightarrow \mathbf{F}(X_{in}, Y_{in}, Z_{in}) \in \Omega_{out}$ that is adapted to map any source color $[X_{in}\ Y_{in}\ Z_{in}]^T$ of a set of source colors into a target color $\mathbf{F}(X_{in}, Y_{in}, Z_{in}) = [X_{out}\ Y_{out}\ Z_{out}]^T$, wherein each source color $(X_{in}, Y_{in}, Z_{in})$ of said set is given a probability $P(X_{in}, Y_{in}, Z_{in})$ within said set, such that the sum of probabilities for all source colors $(X_{in}, Y_{in}, Z_{in})$ within said set is equal to 1, or

$$\sum_{\Omega_{in}} \left( P\left(X_{in}, Y_{in}, Z_{in}\right) \right) = 1 ,$$

said method comprising the following steps :

- definition of a global perception error function, such that, for each source color $[X_{in}\ Y_{in}\ Z_{in}]^T$ of said set, a value is given for this global error function;
- definition of an energy function U(F) as a sum of the values of said global perception error function for all source colors of said set,
- deduction of the said gamut mapping function as the function that minimize of this energy function,

**characterized in that** said sum of the values of said global perception error function defining said energy function U(F) is weighted, for each source color of said set, by its probability $P(X_{in}, Y_{in}, Z_{in})$.

2. Method of definition of a gamut mapping function according to claim 1 **characterized in that** it also comprises the following steps :

- definition of a plurality of (n+1) perception error sub-functions $V_i(X_{in}, Y_{in}, Z_{in}, \mathbf{F}(X_{in}, Y_{in}, Z_{in}))$, where n $\geq$ 0, with i=0 to n, such that, for each source color $[X_{in}\ Y_{in}\ Z_{in}]^T$ of said set, a value $V_i(X_{in}, Y_{in}, Z_{in}, \mathbf{F}(X_{in}, Y_{in}, Z_{in}))$ is given for each perception error sub-function;
- for each perception error sub-function $V_i(X_{in}, Y_{in}, Z_{in}, \mathbf{F}(X_{in}, Y_{in}, Z_{in}))$, definition of a scalar weight $\alpha_i$ wherein 0 < $(\alpha_{i \leq} 1$ and $\sum_{i=0}^{n} \alpha_i = 1$ ; and **in that** said value that is given to the global perception error function for each source color $[X_{in}\ Y_{in}\ Z_{in}]^T$ of said set is equal to the sum of the values of each perception error sub-functions $V_i(X_{in}, Y_{in}, Z_{in}, \mathbf{F}(X_{in}, Y_{in}, Z_{in}))$ taken at said source color $[X_{in}\ Y_{in}\ Z_{in}]^T$ and weighted by its corresponding weight

$$\alpha_i : \sum_{i=0}^{n} \alpha_i V_i\left(X_{in}, Y_{in}, Z_{in}, \mathbf{F}\left(X_{in}, Y_{in}, Z_{in}\right)\right).$$

3. Method of definition of a gamut mapping function according to claim 1 or 2 **characterized in that** each perception error sub-function $V_i(X_{in}, Y_{in}, Z_{in}, \mathbf{F}(X_{in}, Y_{in}, Z_{in}))$ or "potential" is defined in relationship to an optimization criteria of the gamut mapping defined by said gamut mapping function.

4. Method of definition of a gamut mapping function according to any one of claims 1 to 3 **characterized in that** said set of source colors is an image or a segment of a video sequence.

Fig.1

Fig.2

Fig.3

Fig.4

Fig.5

European Patent
Office

**EUROPEAN SEARCH REPORT**

Application Number

EP 08 30 0092

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 377 025 A (SPAULDING KEVIN E [US] ET AL) 27 December 1994 (1994-12-27) | 1,4 | INV. H04N1/60 |
| Y | * column 3, line 58 - column 4, line 8 * <br> * column 5, line 54 - column 6, line 56 * <br> * claims 1,4,7 * <br> ----- | 2,3 | |
| Y | GIESEN J. ET AL: "Image-Dependent Gamut Mapping as Optimization Problem" IEEE TRANSACTIONS ON IMAGE PROCESSING,, vol. 16, no. 10, October 2007 (2007-10), pages 2401-2410, XP002486145 ISSN: 1057-7149 <br> * page 2402, column 2 - page 2403, column 2 * <br> ----- | 2,3 | |
| A,D | US 6 833 937 B1 (CHOLEWO TOMASZ J [US]) 21 December 2004 (2004-12-21) <br> * column 4, line 26 - column 6, line 54 * <br> * column 10, line 59 - column 12, line 67 * <br> ----- | 1-4 | |
| A | US 6 088 038 A (EDGE CHRISTOPHER J [US] ET AL) 11 July 2000 (2000-07-11) <br> * abstract * <br> ----- | 1-4 | TECHNICAL FIELDS SEARCHED (IPC) <br> H04N <br> G06T |

The present search report has been drawn up for all claims

| Place of search | Date of completion of the search | Examiner |
|---|---|---|
| The Hague | 30 June 2008 | Wunderlich, Doreen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................................
& : member of the same patent family, corresponding document

EPO FORM 1503 03.82 (P04C01)

**EP 2 091 226 A1**

## ANNEX TO THE EUROPEAN SEARCH REPORT
## ON EUROPEAN PATENT APPLICATION NO.

EP 08 30 0092

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2008

| Patent document cited in search report | | Publication date | Patent family member(s) | | Publication date |
|---|---|---|---|---|---|
| US 5377025 | A | 27-12-1994 | NONE | | |
| US 6833937 | B1 | 21-12-2004 | NONE | | |
| US 6088038 | A | 11-07-2000 | US | 6362808 B1 | 26-03-2002 |

EPO FORM P0459

For more details about this annex : see Official Journal of the European Patent Office, No. 12/82

11

**EP 2 091 226 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007081176 A
- US 6833937 B
- US 6128407 A
- US 7064864 B